# EUROPEAN PATENT SPECIFICATION

(11) **EP 0 500 139 B1**
(45) Date of publication and mention of the grant of the patent: **29.01.1997**
(21) Application number: 92103079.7
(22) Date of filing: 24.02.1992
(51) Int. Cl.: F02M 35/10, F02M 69/04

(54) **Induction system for a multiple valve internal combustion engine**
Einlassystem für Brennkraftmaschine mit mehreren Ventilen
Système d'admission pour moteur à combustion interne à plusieurs soupapes

(30) Priority: 22.02.1991 JP 50409/91; 22.02.1991 JP 50410/91; 15.03.1991 JP 76807/91
(43) Date of publication of application: 26.08.1992
(73) Proprietor: YAMAHA HATSUDOKI KABUSHIKI KAISHA, Iwata-shi Shizuoka-ken, 438 (JP)
(72) Inventor: Nakamura, Kimiaki, C/o Yamaha Hatsudoki K.K., Iwata-shi, Shizuoka-ken 438 (JP); Ueda, Hideaki, C/o Yamaha Hatsudoki K.K., Iwata-shi, Shizuoka-ken 438 (JP); Osumi, Hiroshi, C/o Yamaha Hatsudoki K.K., Iwata-shi, Shizuoka-ken 438 (JP)
(74) Representative: Grünecker, Kinkeldey, Stockmair & Schwanhäusser Anwaltssozietät

(56) References cited:
- EP-A- 0 321 313
- EP-A- 0 352 820
- JP-A- 6 325 369
- US-A- 4 932 368
- US-A- 5 003 933
- US-A- 5 005 534
- PATENT ABSTRACTS OF JAPAN, vol. 12, no. 340 (M-740), 13th September 1988 & JP-A-63 100 269
- PATENT ABSTRACTS OF JAPAN, vol. 12, no. 041 (M-666), 6th February 1988 & JP-A-62 195 452

## Description

The present invention relates to an internal combustion engine, specifically a 5 valve motorcycle engine, comprising a cylinder body, a cylinder head assembly, a plurality of intake valves for each cylinder, an induction system having an intake tube arrangement, to which an intake passage is connected via an outer connecting port, an air cleaner and a fuel injector.

Generally, the air intake system for the fuel injection type engine has an intake tube arrangement connected to the outer connection port of the intake passage formed through the cylinder head, a throttle body connected to the upstream end of the intake manifold, an air cleaner connected to the upstrem side of the throttle body, and a fuel injection valve installed on the intake manifold or the intake passage

An internal combustion engine of the above-mentioned type is for example shown in JP-A-63-25 369.

Hereupon, the fuel injection valve employed in the air intake system for the fuel injection type engine produces a larger knocking sound when opening/closing its injection nozzle, and this knocking sound leaks outward depending on the installing position of the fuel injection valve causing the problem of engine noise. Since the fuel injection valve is disposed at a position opened outward in many cases expecially when this kind of engine is mounted on the motorcycle, the engine noise above adversely affects the overall quality of the engine. Therefore, it is desired, especially in the air intake system for the fuel injection type motorcycle engine, to restrain the knocking sound from the fuel injection valve from leaking outward.

As is well known, most internal combustion engines are called upon, in their application, to operate over widely varying speed and load ranges. This is particularly true in connection with vehicular applications such as automobiles and motorcycles. As is also well known, because of this speed and load variation over which the engine is operated, there are many compromises in the design of the engine. This is particularly true in the area of the induction system.

It has been well known that combustion at low engine speeds and low engine loads can be significantly improved with attendant improvements in fuel economy and exhaust emission control if a high degree of turbulence is induced into the intake charge and in the combustion chamber. However, all turbulence increasing devices in the induction system tend to offer some flow resistance. Therefore, the use of turbulence increasing devices in the induction system reduces the maximum power output of the engine. Thus, most induction systems are designed as compromise between good low speed performance and good high speed performance.

One form of turbulence which is generated in the combustion chamber is characterized as "swirl". Swirl is a flow of the charge in the combustion chamber in a generally circumferential direction around the axis of the cylinder. Swirl is generally generated by use of swirl ports in the induction system. However, the generation of swirl can reduce the volumetric efficiency at high speed. This is because swirl ports have higher flow resistance than non-swirl ports. In addition, there are some phases of running of the engine when swirl is not desirable even though some form of motion of the charge in the chamber is desirable.

It is well known, engine performance can be increased by using a plurality of intake valves for each cylinder, specifically providing a fuel injection type 4 cycle engine with three intake valves for each of its cylinders, wherein the three intake valve openings are let out of the cylinder outer wall through a trifurcated intake passage having a single outer connecting port to attach an intake tube arrangement extending upstream thereto. As such an intake system for a fuel injection type 4 cycle engine, Japanese unexamined utility model publication Sho62-93122 has disclosed a system in which the centre of the outer connecting port of the intake passage is set off the cylinder centre in the camshaft direction, namely in the direction of the intake valve arrangement, and, a fuel injection valve is mounted on the intake manifold to be set off in the same sense as the intake passage.

However, in the case where the fuel injection valve is set off in the same sense as the intake passage as with the case of the intake system disclosed in the Publication above, the injection nozzle of the fuel injection valve will be set off the central intake valve opening, which may be disadvantgeous for uniformly supplying fuel to the left and right intake valve openings.

On the other hand, to make the injection nozzle agree with the central intake valve opening, it is required to dispose the fuel injection valve obliquely. However, such an oblique disposition of the fuel injection valve causes a problem that the structure of the fuel injection system such as the fuel rail and so on for supplying fuel to the fuel injection valves becomes complicated.

As mentioned above, it is intended to create a horizontal swirl for improving the combustion state by improving the direction of a flow of air which flows into the combustion chamber from the one side intake valve opening beyond that of a flow of air passing through the other side intake valve opening, while supplying fuel to the left and right side intake valve openings as uniform as possible. For such induction systems adapted to a multiple valve internal combustion engine, specifically of a five valve engine having three intake valves and a cylinder, it is already known to dispose the fuel injection valve on a central line of the intake passage which, however, causes difficulties in obtaining both the desired horizontal swirl in the combustion chamber and a uniformed fuel injection to the left and right side intake valve openings. Most specifically, if the fuel injection valve is disposed on the central line of the intake passage, designing the induction system in such a manner as to produce a horizontal swirl of the intake charge, the fuel amounts supplied to the left and right side intake valve openings might become unequal due to the shapes of the intake passages, the injection characteristics of the fuel injection etc.

As regards the above-mentioned problem of engine noise caused by the fuel injection valve, JP-A-63-100 269 shows a fuel injection valve contained in a fuel injection chamber which is part of an air cleaner. This arrangement however is disadvantageous in that difficulties for cooling the injectors arise and the air sucked by the engine is heated through the injector.

Accordingly it is an objective of the present invention to provide an internal combustion engine of the above-mentioned type having an improved induction system that permits to reduce injection noise radiation from the fuel injector, wherein a compact intake arrangement is achieved with the given space being effectively used for disposing the different components thereof.

According to the present invention, said objective is performed in that the fuel injector is disposed in a space generally surrounded by outer surfaces of the cylinder head assembly, the air cleaner and the intake tube arrangement, and in that a downward swelling of the air cleaner extends downwardly towards the cylinder head assembly so as to provide a better barrier against noise radiated from the injector.

According to a preferred embodiment of the present invention, the fuel injector is positioned laterally offset with respect to the longitudinal axis of the intake tube arrangement and is disposed inclined such that a spray axis of the injection valve nozzle of the fuel injector is aligned to the cylinder axis of the associated combustion chamber and the spray axis extends in a direction substantially perpendicular to an axis of a camshaft.

Moreover, preferably the centre of the outer connecting port is disposed laterally offset with respect to the cylinder centre in a camshaft direction and the fuel injector mounted on the intake tube arrangement is disposed laterally offset in a sense opposite to the lateral offsetting of the outer connecting ports, while the spray axis of the fuel injector is kept generally perpendicular to a line connecting the left and right side intake valve openings of the intake valve arrangement.

Accordingly, since in this way, the fuel injector is disposed laterally offset in a sense opposite to the lateral offsetting of the intake passage (more precisely of the centre of the outer connecting port of said intake passage) with respect to the cylinder centre, the spray axis of the injection nozzle of the fuel injector is still in general compliance with the central intake valve port and therefore no difficulties will arise for supplying the fuel uniformly to the left and the right intake valve openings. Moreover, as the axis of the fuel injector is kept generally perpendicular to a line connecting the diametrically opposite side intake valve openings (which is the line corresponding to the axis of the camshaft), the axis of the fuel injector is substantially aligned with a front-rear direction of the engine. Therefore, design and shape of the fuel rail for supplying fuel to the injector etc. becomes simple and a complicated design of the fuel supply system can be avoided.

According to another preferred embodiment, the center axis of the outer connecting port of the intake passage is disposed laterally offset inward of the engine in a direction of a camshaft axis with respect to the cylinder axis by a certain amount and the partitions between the center and side intake ports extend at different lengths in their upstream direction to attribute a swirl motion to the charge injected into the combustion chamber of the engine. Preferably, the spray axis of the fuel injector that aligns to the cylinder axis of the associated cylinder is disposed laterally offset by the same certain amount in a sense opposite to the offsetting of the outer connecting port while said spray axis extends substantially perpendicular to the line connecting the centers of the side intake valves and extending in parallel to a camshaft axis.

According to yet another preferred embodiment the present invention, the fuel injector is positioned in conjunction with an intake line connecting the center axes of the cylinder bore and of the center intake valve port so that a center spray axis of the fuel injector is aligned to said both center axes and in that the partitions at both sides of a center intake valve port provide different lengths of their upstream dimension to attribute a swirl motion to the charge supplied to the combustion chamber while the fuel injector is adapted to spray fuel from its injection valve nozzle such as to assure uniform fuel supply to the side intake valve ports at both sides of the center intake valve port.

According to further preferred embodiments of the latter induction system, the shape of the injection valve nozzle of the fuel injector is designed to provide an injection angle α1 formed between the intake line and a side spray line directed to one of the side and the center intake valves, which are spaced by a partition, the upstream length thereof being larger than that of the other partition, that exceeds the corresponding injection angle α2 formed between the intake line and an opposite side spray line directed to the center intake valve and the other side intake valve.

Another preferred embodiment of the present invention may be found in that the nozzle shape of the fuel injector is either continuously arc-shaped or implies three different nozzles, namely, a central and two side injection nozzles wherein the injection axis of the side injection nozzles diverges from the fuel injector to define an injection angle β1 formed between the intake line and the injection axis of the one side injection nozzle directed to an area where the longer partition extends between the respective side and central intake openings is larger than a corresponding injection angle β2 formed at the other side of the intake line.

Since the first partition is formed longer than the second partition, the air blown into from the first intake valve opening while being rectified by the first partition will be blown into with a directionality clearer than that of the air from the other intake valve opening due to the rectifying effect of the longer partition above, a so-called horizontal swirl can be produced and the combustibility can be improved. Further, although the fuel amount supplied into the first intake valve opening might become smaller due to the length difference between the first and the second partitions in this case, since the fuel injection valve is constructed so that the fuel amount injected toward the first side intake valve opening may be larger than that injected toward the second side intake valve opening, the effect of the partition length difference can be relieved; consequently, the fuel amounts supplied into the first and the second side intake valve openings can be made uniform.

Further preferred embodiments of the present invention are laid down in other dependant claims.

In the following, the present invention is explained in greater detail by means of several embodiments thereof in conjunction with the accompanying drawings wherein:
- Fig. 1: is a left-side view of a motorcycle having an engine according to an embodiment of the present invention;
- Fig.2: is a sectional side view of the induction system according to the present invention used in the engine of Figure 1;
- Fig.3: is a plane view of the induction system of Figure 2;
- Fig.4: is another plane view of the induction system of Figure 2;
- Fig. 5: is a plane view of a throttle body unit of the induction system as shown in the preceding figures, said view being taken along the arrow V in Figure 6;
- Fig.6: is a side view of the throttle body unit of Figure 5;
- Fig.7: is a sectional plane view of the induction system according to Figure 2 of the present invention;
- Fig.8: is a sectional view taken along the line VIII-VIII of Figure 2;
- Fig.9: is a partly sectional side view of the induction system, partly schematical according to another embodiment of the invention;
- Fig.10: is a sectional plane view typically showing an embodiment of the induction system for a fuel injection type four cycle engine according to an embodiment thereof, specifically in the area of the induction passage;
- Fig.11: is a sectional plane view similar to Figure 10 but for a modified other embodiment of the induction system according to the present invention;
- Fig.12: is a perspective view typically showing an injection nozzle portion of the fuel injector used in the embodiments of Figures 10 and 11;
- Fig.13: is a sectional plane view of the induction system showing another embodiment of the present invention;
- Fig.14: is a sectional plane view typically showing a modified embodiment (similar to that of Figure 11) for a different type of injection nozzle according to the present invention; and
- Fig.15: is a perspective view particularly, showing an injection nozzle portion of the fuel injector according to yet another embodiment of the present invention used in the embodiments of Figures 13 and 14.

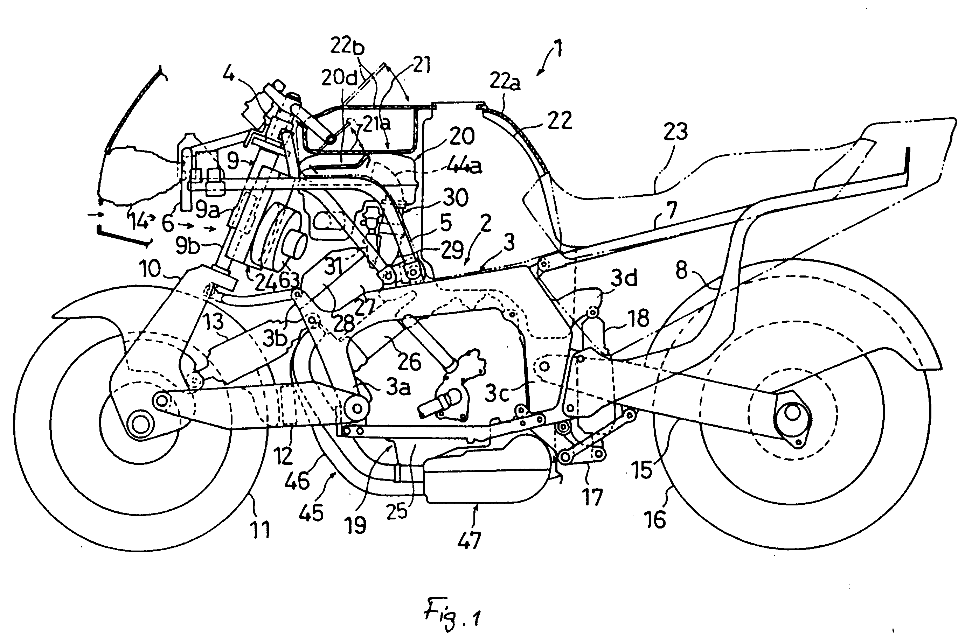

In the following, the present invention is explained but first basically referring to a motorcycle as shown in Figure 1. In view of the particularities of several embodiments of the induction system that are explained later on, it should be noted that similar engines and induction systems could not only be applied to a multi-valve, multi-cylinder motorcycle engine but the principles could also be applied to automobile engines.

In the drawings, the reference numeral 1 denotes a motorcycle and its body frame 2 is constructed by connecting a pair of left and right main frames 3 generally inverse- 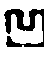 -shaped in their side view with each other through a cross pipe, supporting a head pipe 4 through a head bracket 5 connected to the upper surface of the upper side of the main frame 3, providing a lamp stay 6 for supporting the head lamp 14 on the forward extension of the head bracket 5, connecting a seat rail 7 to the rear end of the upper side of the main frame 3, and connecting the seat rail 7 with the rear arm bracket portion 3c (the rear side of the rain frame 3) through a seat stay 8.

On the lower end of the front bracket portion 3a which is the front side of the rain frame 3, a front arm 12 is supported for swinging vertically. This front arm 12 is formed generally in h shape in its plan view, the rear end portion of the arm 12 is supported for swinging on the front bracket portion 3a, and to its front end is connected, through a ball joint (not shown), a front wheel bracket 10 for supporting the front wheel 11 for rotation at its lower end. The lower portion of the front wheel bracket 10 and the upper end of the front bracket 3a are connected with each other through a front cushion 13, and further the front wheel bracket 10 is supported for steering leftward and rightward through a steering shaft 9 by the head pipe 4. This steering shaft 9 is composed of an upper pipe 9a supported for rotation by the head pipe 4 and a lower pipe 9b inserted in the upper pipe 9 for sliding axially and fixed on the upper end of the front wheel bracket 10, and is disposed so that its upper portion may be positioned rearward of its lower portion, namely with a rearward inclination.

On the rear arm bracket portion 3c of the main frame 3 is supported for swinging vertically a rear arm 15 which supports the rear wheel 16 with its rear end. The front portion of the rear arm 15 is connected with the lower end portion of the rear arm bracket portion 3c through a link mechanism 17, and the link mechanism 17 is connected with the cushion bracket 3d of the rear arm bracket 3c through a rear cushion 18.

The engine unit 19 is suspended by the rain frame 3. Above the front portion of the engine 19 are mounted an air cleaner 20 and a glove box 21 in this order from bottom, above the rear portion of the engine unit 19 is mounted a fuel tank 22, and a seat 23 is disposed behind the fuel tank 22. The glove box 21, fuel tank 22, etc., are surrounded with a tank cover 22a having a lid portion 22b formed at the glove box portion, and another lid 21a is formed at the bottom of the glove box 21.

A radiator 24 is disposed behind the steering shaft 9. This radiator 24 is constructed by fixing a water feed box 24b and a water discharge box 24c on the right and left ends, respectively, of the element 24a curved so as to be convex rearward and a pair of left and right blower fans 63 and 63 are disposed behind the radiator 24 each with a displacement toward the outside lower corner. The radiator 24 is inclined rearward along the steering shaft 9 as viewed sideways. The water feed box 24b of the radiator 24 is connected with the cylinder head 27 through a cooling water hose 43, thermostat valve 42 and a water discharge pipe 41.

Further, around the radiator 24 are disposed various members such as a cooling water recovery tank 39a, relays 39b and 39c, ignition coil 39d, fuse box 39e and so on, and these are supported on the lamp stay 6.

The engine unit 19 is of a water-cooled 4-cycle parallel 4-cylinder type and is constructed by stacking and fastening a cylinder body 26, a cylinder head 27 and a head cover 28 on the upper front portion of the crankcase 25. The cylinder head 27 is of a bisectional structure composed of a lower head 27a and an upper head 27b. On the exhaust valve openings 40a and 40a and intake valve openings 40b, 40c and 40d are disposed exhaust valves 32a and intake valves 32b, respectively. The exhaust valve openings 40a and 40a are led out of the cylinder front wall through an exhaust passage 27c and the intake valve openings 40b, 40c and 40d are led out of the cylinder rear wall through an intake passage 62.

The exhaust passage 27c is of a bifurcated type having one outer connecting port (exhaust port) to which is connected an exhaust pipe 46 of the exhaust system 45, and the exhaust pipe 46, four in all, extends downward from the front of the crankcase 25 and is connected to a single large chamber 47 disposed under the crankcase 25.

To the outer connecting port 27h of the intake passage 62 is connected an intake tube arrangement 29, to the upper end of which is connected, generally vertically as a whole, a throttle body 30 incorporated with a throttle valve 30a, and the air cleaner 20 is connected to the throttle body 30.

The air cleaner 20 has a construction in which a slot-shaped escape portion 44e is formed through the forward central portion of the bisectional cleaner case composed of a top and a bottom cases 20a and 20b, a pair of left and right cleaner elements 44c are disposed in the left and right portions of the cleaner case partitioned by the escape portion 44e, and an outer air introducing duct 44b is inserted in and connected to each element 44c. The bottom case 20a has element accomodating chambers 20c for accomodating the elements 44c formed by swelling its front bottom portion downward, and the top case 20b has an accomodating cavity 20d formed downward on its front ceiling portion. Between the accomodating cavity 20d and the glove box 21 is disposed a control box 44d for controlling the engine. The reference numeral 44a denotes an intake funnel connected to the throttle body 30 and directed to the element 44c portion.

Four throttle bodies 30 are intgrated through joining brackets 56a and 56b, and a wax 57 constituting an auto-choke mechanism for increasing the intake air amount when starting the engine in a cold weather is disposed at its central lower portion. The amount of the fuel injected by the fuel injection valve is increased during such a starting. The wax 57 is surrounded nearly all around. The wax 57 is connected with the operating mechanism for the throttle valve 30a through a link 57a, and all throttle valves 30a are connected with one another through a synchronizing mechanism 30c. The reference numeral 30b denotes a guide member for the throttle cable 30d which, while being guided by this guide member 30b, extends toward the steering handle through the escape portion 44e of the air cleaner 20.

The intake passage 62 is of a trifurcated type formed by leading out the left and right side passages 27d and 27f communicated with the left and right intake valve openings 40b and 40d respectively and the central passage 27e communicated with the central intake valve opening 40c to the cylinder rear wall through a common passage 27g. Here, the center *b* of the outer connecting port 27h of the common passage 27g is set off the cylinder center *a* inward of the engine by a distance *D* in the arranging direction of the intake valve openings 40b and 40d, namely in the camshaft direction, and its center line is inclined inward of the engine when seen as a whole. Therefore, the partition between the central passge 27e and the right side passage 27f becomes longer than that between the central passage 27e and the left side passage 27d by a length *e*. Therefore, the flow regulating effect of the right side passage increases and the flow speed in it becomes higher than that in the left side passage 27d, consequently a swirl will be generated in the direction of the arrow *f*. Further, the intake tube arrangement 29 is extended in the same direction as the intake passage 62, namely inward of the engine, and is mounted on the engine by fastening through bolts its lower end flange 29a on the rear wall of the lower head 27a.

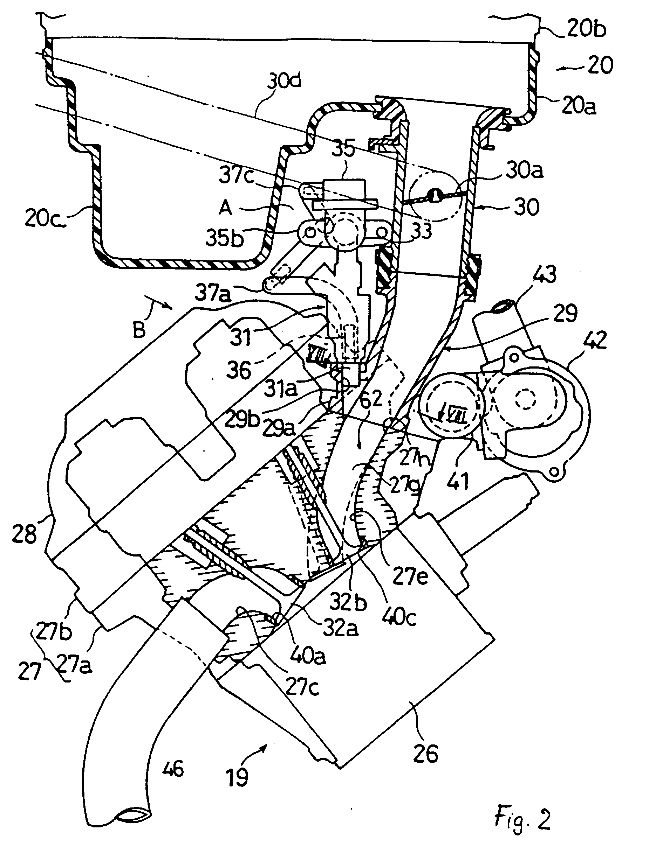

On the front side of the intake tube arrangement 29, namely in the space *A* surrounded, as viewed sideways, by the intake tube arrangement 29, throttle body 30, downward swelling 20c of the air cleaner 20, and upper head 27b and head cover 28 of the engine unit 19, is mounted a fuel injection valve 31 generally vertically, and its injection nozzle 31a is inserted in the valve hole 29b formed in the vicinity of the lower end flange portion 29a of the intake tube arrangement 29. Further, as viewed in the direction of the arrow B of Fig.2 the axis *c* of the fuel injection valve 31 is set off by a distance *D* in a sense opposite to that of the outer connecting port 27h with its axis kept perpendicular to the line *d* connecting the left and right intake valve openings 40b and 40d, namely to the camshaft. Consequently, the axis *c* of the fuel injection valve 31 agrees with the cylinder center *a* , and is directed nearly toward the valve plate of the central intake valve 32b.

The upper end portion of the fuel injection valve 31 is inserted in and connected to the fuel rail 33 for fuel supply, and this fuel rail 33 is disposed in parallel to the camshaft. To the right end 33a of the fuel rail 33 is connected a fuel filter 34 through a supply hose 34a which is in turn connected to a fuel pump (not shown) disposed in the fuel tank 22. The fuel pump is diposed in a dwonward swelling 22a formed on the rear portion of the fuel tank 22 and the downward swelling 22a is positioned between the left and right rear arm bracket portions 3c of the main fame 3. To the flange portion 33b at the left end of the fuel rail 33 is connected a regulator 35 for controlling the fuel pressure to a specified value.

On the portion of the lower end flange portion 29a of each intake tube arrangement 29 adjacent to the valve hole 29b is disposed a negative pressure detecting nozzle 36. These detecting nozzles, four in all, are joined and communicated with one another through pressure leading tubes 37a, and to one end of the junction portion is connected an intake pressure detecting sensor 38 through a pressure leading tube 37b. The other end of the junction portion is connected to the regulator 35 through a pressure leading tube 37c. Although not shown here, each pressure leading tube 37a has a throttling formed at every portion connected to the negative pressure detecting nozzle 36 so that the interference of the intake negative pressures between cylinders may be avoided.

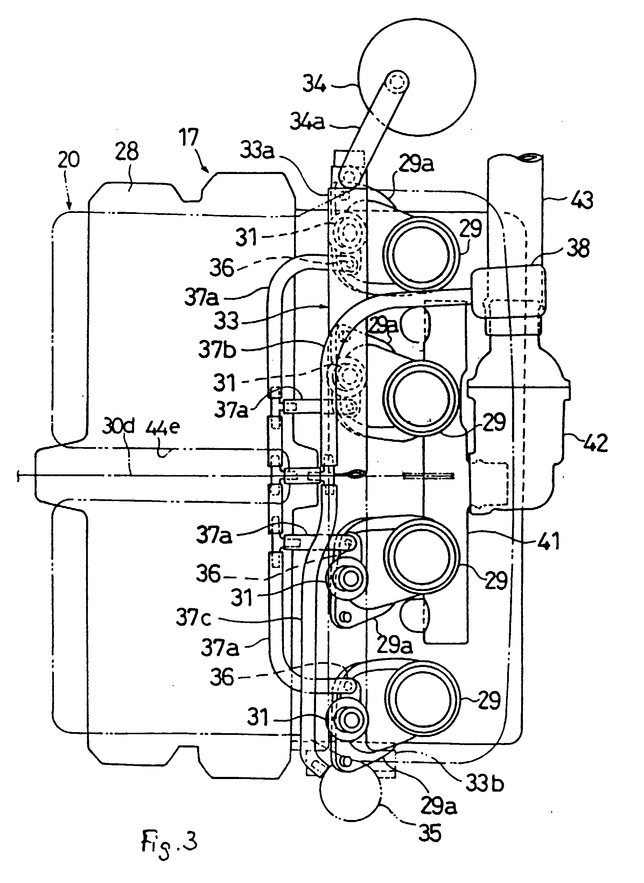

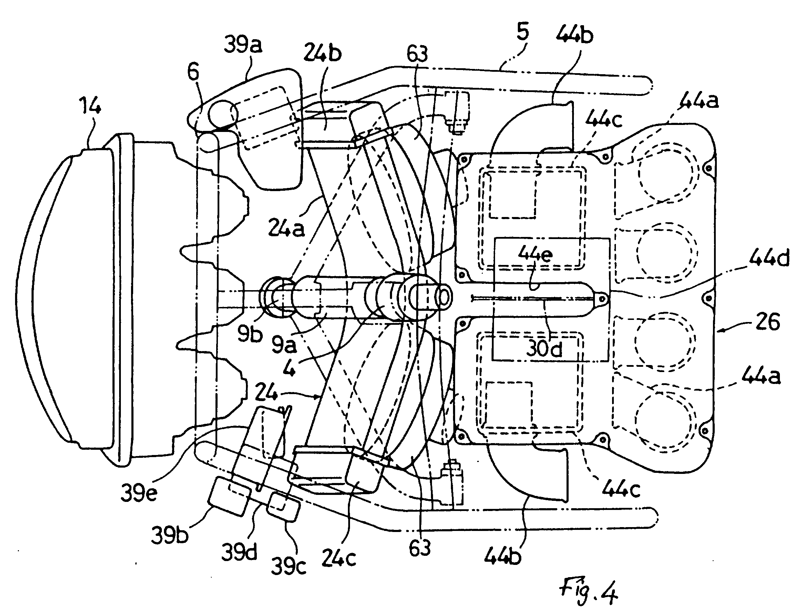

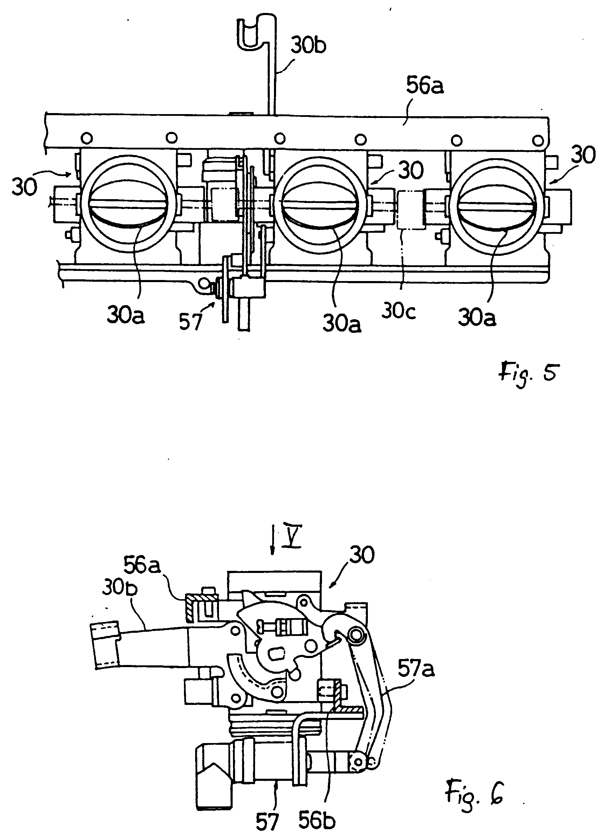

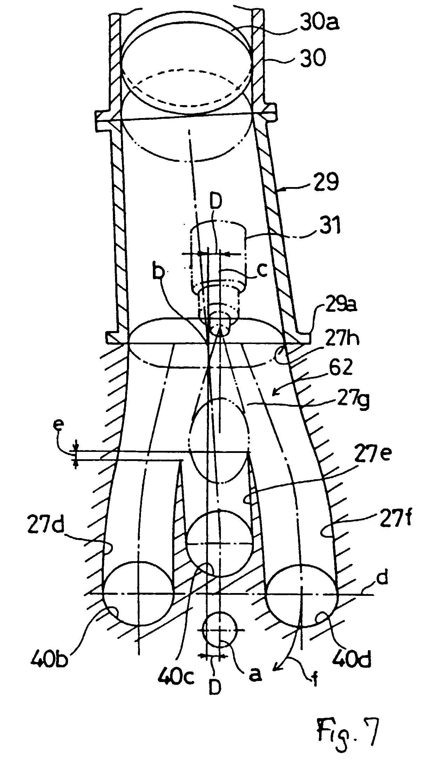

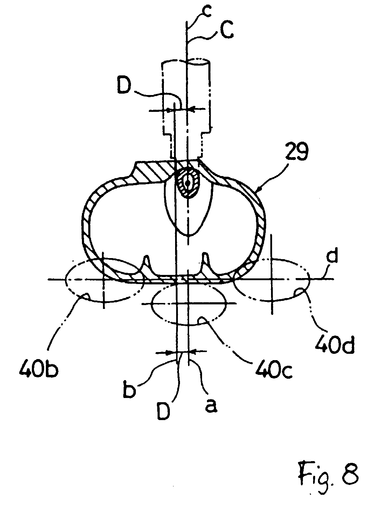

The function and effect of this embodiment according to Figs. 1 to 8 is described next.

With the air intake system according to this invention, since the fuel injection valve 31 is disposed in the space *A* generally surrounded, as viewed sideways, by the cylinder head 27, head cover 28, intake tube arrangement 29, throttle body 30, and the bottom cover 20a of the air cleaner 20, the knocking sound and the like from the fuel injection valve 31 are intercepted by the members forming the space *A* and are restrained from leaking outward.

Further, since the space *A* is formed as a rectangle having a smaller longitudinal size by forming it with the intake tube arrangement 29 disposed generally vertically, the throttle body 30, the vertical wall of the element accomodating chamber 20c formed by swelling down the bottom case 20a of the air cleaner 20, the increase of the overall longitudinal size of the engine is avoided while securing the space *A*. Further, since the center *b* of the outer connecting port 27h of the intake passage 62 is set off inward with respect to the engine by a distance *D*, the intake tube arrangement 29 is extended in the direction of the intake passage 62, and the fuel injection valve 31 is set off with its axis *c* kept perpendicular to the camshaft, the intake passage or the fuel injection valve 31 will not protrude in the engine width direction, which serves for avoiding the increase of the engine width.

In this embodiment, the control unit 44d is disposed between the accomodating cavity 20d formed on the upper case 20b of the air cleaner 20 and the glove box 21. Therefore, since this portion is apart from the engine and easily receives the air flow due to driving, countermeasure against the heat is easy, and, since the driving vibration is absorbed by the air cleaner and so on, countermeasure against the vibration is easy. Purther, inspection and repair are facilitated by removing the glove box.

Still further, since the auto-choke wax 57 is disposed at the central lower portion of the throttle body unit, throttle bodies 30 assembled as a unit, the wax 57 is surrounded nearly all around, is not easily affected by the open air and, consequently, the performance of the auto-choke is stabilized.

With the air intake system for the fuel injection type engine according to this invention, since the fuel injection valve is disposed in a space surrounded by the upper portion of the engine, the intake tube arrangement and the air cleaner, the noise from the fuel injection valve is intercepted by the members forming the space above and, consequently, outward leakage of the noise is restrained.

With the air intake system according to this invention, the center *b* of the outer connecting port 27h of the intake passage 62 is set off inward of the engine by a distance *D*, and the intake tube arrangement 29 is extended in the direction of the intake passage 62. Therefore, the intake passage 62 and the intake tube arrangement 29 is inclined generally inward of the engine. The fuel injection valve 31 is set off by the distance *D* in a sense opposite to the intake passage 62 with its axis *c* kept perpendicular to the line *d* connecting the left and right intake valve openings 40b and 40d, namely to the camshaft. Therefore, the fuel injection valve 31 agrees with the front-rear direction of the engine and will not protrude outward. Since the fuel injection valve 31 agrees with the front-rear direction of the engine as just described and the intake tube arrangement 29 on which is mounted the fuel injection valve 31 is inclined inward of the engine, the increase of the engine width can be avoided. Further, since the direction of the fuel injection valve agrees with the front-rear direction of the engine, a single straight fuel rail 33 can be directly connected to all injection valves 31, and the structure of the fuel supply system will not be complicated.

Further, since the fuel injection valve 31 and the intake passage 62 are set off by a distance *D* in senses opposite to each other in this embodiment, the fuel injection valve 31 is positioned at the cylinder center *a* consequently, and is directed toward the center of the central intake valve opening 40c. This is advantageous for uniformly supplying fuel to the left and right intake valve openings without increasing the engine width.

Although the intake passage 62 and the fuel injection valve 31 are both set off by an identical distance *D* in the embodiment above, their offset distances need not be identical but are only required to be such that the injected fuel will hit the valve plate portion of the intake valve and will be supplied to the left and right intake valve openings in good balance.

With the air intake system for the fuel injection type 4-cycle engine according to this invention, since the center of the outer connecting port of the intake passage is set off in the camshaft direction, to the outer connecting port is connected an intake manifold extending in the direction of the offset above, and the fuel injection valve mounted on the intake tube arrangement is set off in a sense opposite to the intake passage with its axis kept perpendicular to the camshaft as described above, an effect is obtained that the complication of the fuel supplying system can be avoided while uniform fuel supply is secured.

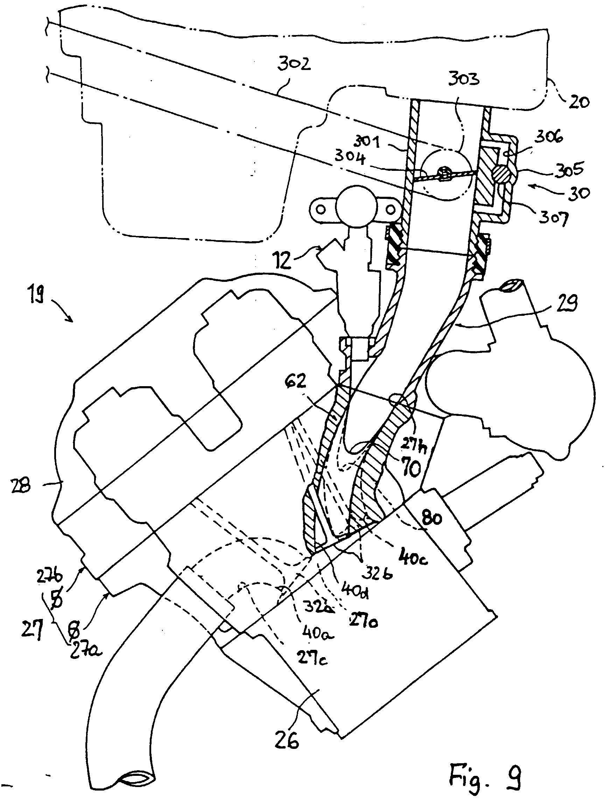

In the following, further embodiments of the induction system of the present invention are explained pointing to Figures 9 to 15, respectively. In Figure 9, generally, a slightly modified plane sectional view of the air intake passage is shown, comprising a throttle valve bypass arrangement.

In these drawings, the reference numberal 19 denotes a parallel four cylinder five valve engine which is constructed by stacking and fastening through bolts a cylinder body 26, a cylinder head 27 and a head cover 28 with a forward inclination on the upper front portion of the crankcase (not shown). The cylinder head 27 is of a bisectional structure composed of an upper head 27b and a lower head 27a. The combustion chamber cavity 270 formed for each cylinder on the surface of the lower head 27a mating with the cylinder body head 26 has two exhaust valve openings 40a formed therethrough, and these exhaust valve openings 40a are provided with the exhaust valves 32a for opening/closing them respectively. The exhaust valve openings 40a are led out of the cylinder front wall through a bifurcated exhaust passage.

The combustion chamber cavity 270 of the lower head 27a also has three intake valve openings 40b, 40c and 40d, formed therethrough, namely, central intake valve opening 40c, first side intake valve opening 40d and second side intake valve opening 40b, respectively provided with intake valves 32b for opening/closing them. To the outer connecting port 27h of the intake passage 62 for leading the intake valve openings 40b through 40d out of the cylinder rear wall are connected an intake tube arrangement 29 and a throttle body 30 so as to be extended vertically, and to these four throttle bodies 30 is connected a common air cleaner 20. The throttle body 30 is composed of a fixed venturi type intake case 301 and a throttle valve 304 rotatably disposed in the intake case 301 to be operated by a throttle cable 302 through a throttle pulley 303. The throttle body 30 has a bypass body 305 integrally formed on one side thereof, and a bypass passage 306 for the throttle valve 304 is formed in the body 305. The passage area of this bypass passage 306 is so adjusted by a slide valve 307 as to be increased as the temperature drops.

The three intake valve openings 40b through 40d are arranged generally arcuately along the periphery of the combustion chamber cavity 27o. The intake passage 62 from one outer connecting port 27h is trifurcated into the center passage 27e for the central intake valve opening 40c, the first side passage 27f for the first side intake valve opening 40d and the second side passage 27d for the second side intake valve opening 40b.

The center point b of the outer connecting port 27h of the intake passage 62 is displaced toward the first side passage 27f by a distance c from the intake line L connecting the cylinder center point o and the center point n of the central intake valve opening 40c. The first boundary wall (partition) 70 between the cental passage 27e and the first side passage 27f is longer than the second boundary wall (partition) 80 between the cental passage 27e and the second side passage 27d by a length e. Although this wall length difference e is caused mainly by the fact that the outer connecting port 27h is positioned eccentrically while the sectional area of the passages 27d through 27f are equal to one another, this difference e is also affected by the following dimensions: positions and sizes of the intake valve openings 40 b through 40d, sectional forms and curvatures of the passages 27d through 27f, etc. Therefore, in some cases, the partition on the side to which the outer connecting port 27h is displaced may become shorter.

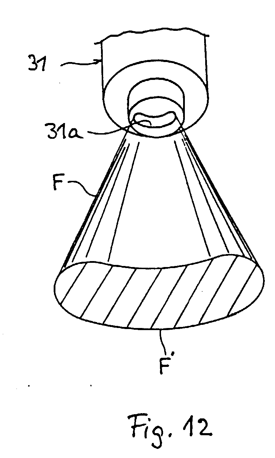

The fuel injection valve 31 is of a so-called one-jet type having a single injection nozzle 31a and is disposed on the intake tube arrangement 29 wall surface on the cylinder head side so that its injection nozzle 31a may be positioned on the intake line L. The fuel injection valve 31 is constructed so that the injected fuel may have a following form and a following quantitative distribution: first, the shape, etc., of the injection nozzle 31a are set so that the sectional form of the injected fuel F sectioned perpendicularly to the injection axis may be generally elliptic and generally curved arcuately with its midsection F' lowered as shown in Figure 12. This is for the purpose of making the injected fuel hit against the back surface of the valve plate portion of each intake valve 40b through 40d without hitting against the wall surface of the intake passage 62 by making the cross-sectional form of the injected fuel F conform to the cross-sectional form of the intake passage 62.

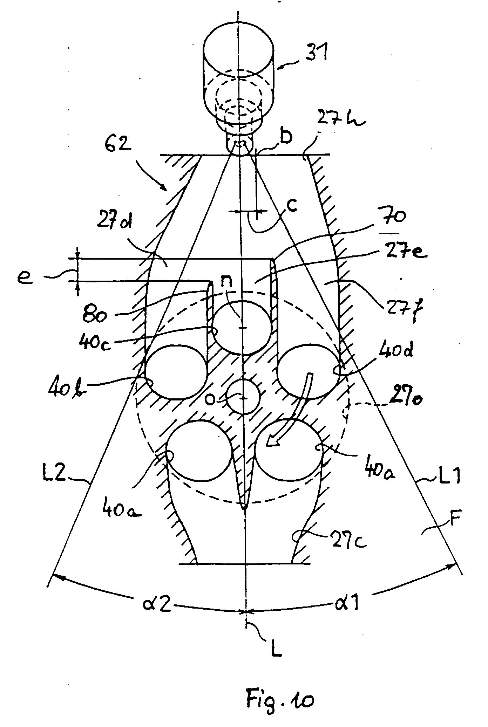

Second, while the fuel F injected from the injection nozzle 31a will spread generally to form a triangle as seen in the cylinder axis direction as shown in Figure 10, the shape, etc., of injection nozzle 31a are set so that the first injection angle α1 formed between the intake line L and the generating line L1 of this injection triangle on the side of the first side intake valve opening 40d may be larger than the second injection angle α2 formed between the intake line L and the generating line L2 on the side of the second side intake valve opening 40b.

Next are described the function and the effect of this embodiment.

With this embodiment system, the air introduced from outside is branched into the first side passage 27f, the central intake passage 27e and the second side passage 27d in the intake passage 62 and is supplied into the combustion chamber from the intake valve openings 40b, 40c, and 40d, respectively. In this case, since the first side intake passage 27f has its first boundary wall 70 set longer than that 80 on the second side passage 27d side by a length e, its rectifying effect is larger. Therefore, the air supplied from the first side intake valve opening 27f is supplied into the combustion chamber with a clearer directionality; consequently, a closckwise horizontal swirl will be produced as shown.

On the other hand, with this embodiment system, although the fuel amount supplied on the first side passage 27f side might be smaller than that on the second side passage 27d side because the first boundary wall 70 is set longer than the second boundary wall 80, since the fuel injection valve 12 is set so that the first injection angle α1 of its injection triangle on the side of the first side passage 27f may be larger than the second injection angle α2 on the side of the second side passage 27d, the effect of the boundary wall length difference is relieved; consequently the fuel amounts from the first and the second side intake valve openings 40d and 40b can be made uniform.

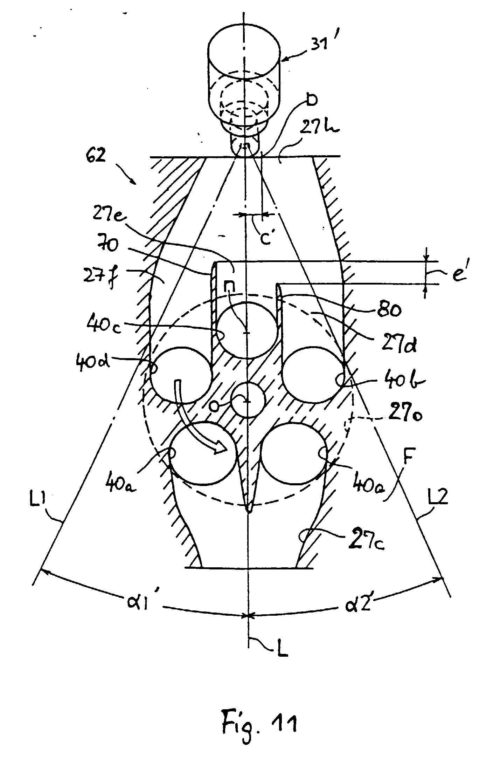

Here, although the boundary wall 70 on the side to which the outer connecting port 27h is displaced is set longer in the embodiment above, the boundary wall 80 on the opposite side may be set longer as is the case with a modification shown in Figure 11. In this case, the first boundary wall 70 will be set longer than the second boundary wall 80, since the fuel injection valve 12 is set so that the first injection angle a1 of its injection triangle on the side of the first side passage 27f may be larger than the second injection angle a2 on the side of the second side passage 27d, the effect of the boundary wall length difference is relieved; consequently the fuel amounts from the first and the second side intake valve openings 40d and 40b can be made uniform.

Here, although the boundary wall 70 on the side to which the outer connecting port 27h is displaced is set longer in the embodiment above, the boundary wall 80 on the opposite side may be set longer as is the case with a modification shown in Figure 11. In this case, the first boundary wall 70 will be set longer than the second boundary wall 80 by a length e' and the fuel injection valve 31' is constructed so that the first injection angle a1' of the injected fuel F on the side of the first side passage 27f may be larger than the second injection angle a2' on the side of the second side passage 27d. With this structure, a counterclockwise swirl is produced and the fuel amounts toward the first and the second side intake valve openings 40d and 40b can be made uniform.

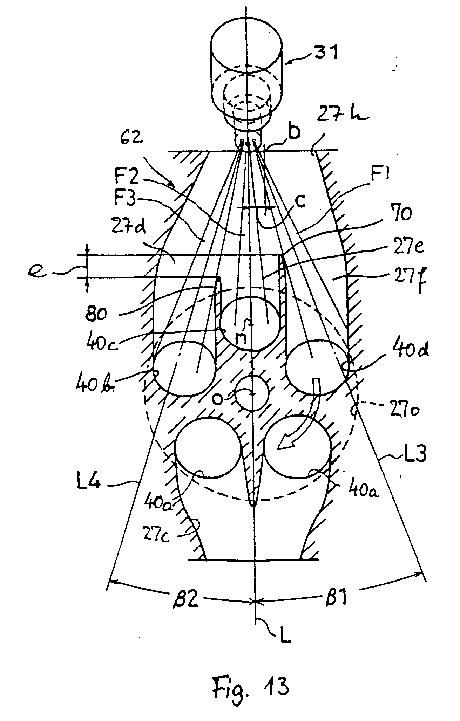

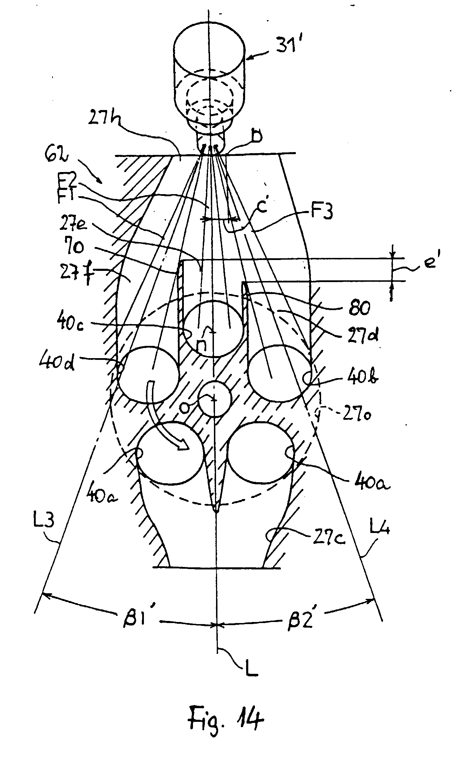

Figures 13 and 14 are drawings for discribing another embodiment of the invention and the same reference numberals in these drawings as in Figures 10 and 11 denote the same or corresponding members.

In this embodiment, the center b of the outer connecting port 27h of the intake passage 62 is displaced from the intake line L to the first side passage 27f side, and the first boundary wall 70 is set longer than the secound boundary wall 80 by a lenght e.

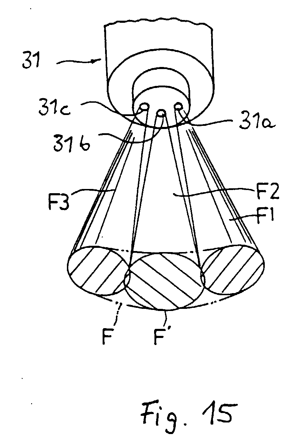

The fuel injection valve 31 employed here has three injection nozzles 31a through 31c having their shapes, arrangement, positions, etc., set so that the whole of fuel F1, F2 and F3 injected from them may be generally elliptic and curved arcuately with its midsection F' lowered in its cross-sectional view as shown in Figure 15. This is for the purpose of making the cross-sectional form of the injected fuel F conform to the cross-sectional form of the intake passage 62 as is the case with the first embodiment described above referring to Figure 10.

Further, the arrangement, positions, shapes, etc., of the injection nozzles for the fuel injection valve 31 are set so that the first injection angle β1 formed between the intake line L and the axis L3 of the injected fuel F1 on the side of the first side passage 27f may be larger than the second injection angle β2 formed between the intake line L and the axis L4 of the injected fuel F3 on the side of the second side passage 27d.

With this setting, effects are obtained, in the same manner as in the embodiment shown in Figure 10 through 12, that a clockwise swirl shown is produced and that the fuel amounts supplied from the first and the second side intake valve openings 40d and 40b are made uniform

Figure 14 shows a modification for the embodiment shown in Figure 13 and this modification corresponds to the modification shown in Figure 11. In this modification, its fuel injection valve 31' is constructed so that the first injection angle β1' formed between the intake line L and the injection axis L3 of the injection fuel F1 on the side of the first side passage 27f may be larger than the second injection angle β2 formed between the intake line L and the injection axis L4 on the side of the second side passage 27d.

With this construction, effects are obtained, in the same manner as in the embodiment shown in Figure 11, that a counterclockwise swirl shown is produced and the fuel amounts supplied from the first and the second side intake valve openings 40d and 40b are made uniform.

Although the outer connecting port is displaced in the embodiments and modifications in the description above, this invention does not always require to displace the outer connecting port.

As described above, with the air intake system for the fuel injection type four-cycle engine according to this invention, since one boundary wall is set longer than the other boundary wall and the injection characteristics of the fuel injection valve is constructed so that the fuel amount injected into the side passage on the side of the longer boundary wall may be larger than that on the opposite side, effects are obtained that, while producing a horizontal swirl the fuel amounts into both side intake valve openings can be made uniform by relieving the effect of the boundary wall length difference and the engine performance can be improved.

## Claims

1. An internal combustion engine, specifically a 5 valve motorcycle engine, comprising a cylinder body (26), a cylinder head assembly (27, 28), a plurality of intake valves (32b) for each cylinder, an induction system having an intake tube arrangement (29), to which an intake passage (62) is connected via an outer connecting port (27b), an air cleaner and a fuel injector (31), **characterised in that** said fuel injector (31) is disposed in a space (A) generally surrounded by outer surfaces of the cylinder head assembly (27, 28), the air cleaner (20) and the intake tube arrangement (29), and in that a downward swelling (20c) of the air cleaner (20) extends downwardly towards the cylinder head assembly (27, 28) so as to provide a barrier against noise radiated from the injector (31).

2. Internal combustion engine as claimed in claim 1, **characterised in that** the air cleaner (20) comprises a downwardly projecting portion (20c).

3. Internal combustion engine as claimed in claim 1 or 2, **characterised in that** the cylinder head assembly comprises a cylinder head (27) composed of a lower head (27a) and an upper head (27b).

4. Internal combustion engine as claimed in at least one of claims 1 to 3, **characterised in that**, the fuel injector (31) is positioned laterally offset with respect to a longitudinal axis of the intake tube arrangement (29) and inclined such that a spray axis of an injection valve nozzle (31a) of the fuel injector (31) is aligned to the cylinder axis (a) of the associated combustion chamber and that the spray axis extends in a direction substantially perpendicular to an axis of a camshaft.

5. Internal combustion engine, as claimed in at least one of claims 1 to 3, **characterised in that** the engine is a multi-cylinder engine provided, for each cylinder, with at least one center and two side intake valves (32b), the respective valve ports (40b, 40c, 40d) thereof as defined by valve seats are separated by partitions of a cylinder head (27), said partitions extending in an upstream direction from cylinder head wall portions between adjacent valve seats and dividing the intake passage (62) for each cylinder into central and side branched portions (27e, 27d, 27f).

6. Internal combustion engine as claimed in claim 5, **characterised in that** a center axis (b) of the outer connecting port (27h) of the intake passage (62) is disposed laterally offset inward of the engine in a direction of a camshaft axis with respect to the cylinder axis (a) by a certain amount (D) and the partitions between the center and side intake ports (40c, 40b, 40d) extend at different lengths in their upstream direction to attribute a swirl motion to the charge injected into a combustion chamber of the engine.

7. Internal combustion engine as claimed in claim 5 or 6, **characterised in that**, a spray axis (c) of the fuel injector that is aligned with the cylinder axis (a) of the associated cylinder, is disposed laterally offset by the same certain amount (D) in a sense opposite to the offsetting of the outer connecting port (27h), said spray axis (c) extending substantially perpendicularly to a line (d) connecting the center of the side intake valves (32b) and extending in parallel to a camshaft axis.

8. Internal combustion engine as claimed in claim 5, **characterised in that** the fuel injector (31) is positioned in conjunction with an intake line (L) connecting the center axes (o,n) of the cylinder bore and of the center intake valve port (40c) so that a center spray axis of the fuel injector (31) is aligned to said both center axes (o,n), and in that the partitions at both sides of a center intake valve port (40c) provide different lengths of their upstream dimension to attribute a swirl motion to the charge supplied to a combustion chamber while the fuel injector (31) is adapted to spray fuel from its injection valve nozzle (31a) such as to assure uniform fuel supply to the side intake valve ports (40b, 40d) at both sides of the central intake valve port (40c).

9. Internal combustion engine as claimed in claim 8, **characterised in that**, the shape of the injection valve nozzle arrangement of the fuel injector (31) is designed to provide an injection angle (α1, α1', β1, β1') between the intake line (L) and a side spray line directed to one of the side and the center intake valves (32b) which are spaced by that partition the upstream length of which is larger than that of the opposite one to exceed the corresponding injection angle (α2, α2', β2, β2') at the opposite side of the intake line (L).

10. Internal combustion engine as claimed in at least one of claims 8 or 9, **characterised in that**, the fuel injector (31) is disposed laterally offset with respect to a center line (b) of the outer connecting port (27h) of the air intake passage (62).

11. Internal combustion engine as claimed in at least one of the preceding claims 8 to 10, **characterised in that**, the fuel injector (31) comprises an injection nozzle (31a) having an arc shaped nozzle opening.

12. Internal combustion engine as claimed in at least one of the preceding claims 8 to 11, **characterised in that**, the fuel injector (31) comprises a plurality of injection nozzles (31a, 31b, 31c), preferably a central and two sides injection nozzles (31b; 31a, 31b) wherein the injection axes of the side injection nozzles (31a, 31b) diverge from the fuel injector (31).

## Patentansprüche

1. Brennkraftmaschine, insbesondere Fünfventil-Motorradmotor, mit einem Zylinderkörper (26), einer Zylinderkopfanordnung (27, 28), einer Mehrzahl von Einlaßventilen (32b) für jeden Zylinder, einem Ansaugsystem, das eine Ansaugrohranordnung (29) aufweist, mit der ein Ansaugkanal (62) über eine äußere Verbindungsöffnung (27b), einen Luftreiniger und eine Kraftstoffeinspritzvorrichtung (31) verbunden ist, **dadurch gekennzeichnet**, daß die Kraftstoffeinspritzeinrichtung (31) in einem Raum (A) angeordnet ist, der im wesentlichen durch Außenoberflächen der Zylinderkopfanordnung (27, 28), des Luftreinigers (20) und der Ansaugrohranordnung (29) umgeben ist, und daß eine nach unten gerichtete Erweiterung (20c) des Luftreinigers (20) sich nach unten in Richtung auf die Zylinderkopfanordnung (27, 28) erstreckt, um eine Barriere gegen das Geräusch zu bilden, das von der Einspritzvorrichtung (31) abgestrahlt wird.

2. Brennkraftmaschine nach Anspruch 1, **dadurch gekennzeichnet**, daß der Luftreiniger (20) einen nach unten vorspringenden Teil (20c) aufweist.

3. Brennkraftmaschine nach Anspruch 1 oder 2, **dadurch gekennzeichnet**, daß die Zylinderkopfanordnung einen Zylinderkopf (27) aufweist, der aus einem unteren Kopf (27a) und einem oberen Kopf (27b) zusammengesetzt ist.

4. Brennkraftmaschine nach zumindest einem der Ansprüche 1 bis 3, **dadurch gekennzeichnet**, daß die Kraftstoffeinspritzvorrichtung (31) seitlich versetzt in Bezug auf eine Längsachse der Ansaugrohranordnung (29) und derart geneigt angeordnet ist, daß eine Spritzachse einer Einspritzventildüse (31a) der Kraftstoffeinspritzeinrichtung (31) mit der Zylinderachse (a) der zugehörigen Verbrennungskammer übereinstimmend ausgerichtet ist und daß die Spritzachse sich in einer Richtung im wesentlichen rechtwinklig zu einer Achse einer Nockenwelle erstreckt.

5. Brennkraftmaschine nach zumindest einem der Ansprüche 1 bis 3, **dadurch gekennzeichnet**, daß der Motor ein Mehrzylindermotor ist, der für jeden Zylinder mit zumindest einem Mittel- und zwei Seiten-Einlaßventilen (32b) versehen ist, deren zugehörige Ventilöffnungen (40b, 40c, 40d), die durch Ventilsitze begrenzt werden, durch Trennabschnitte eines Zylinderkopfes (27) getrennt sind, wobei die Trennabschnitte sich in einer stromaufwärts gerichteten Richtung von den Zylinderkopf-Wandabschnitten zwischen benachbarten Ventilsitzen aus erstrecken und den Ansaugkanal (62) für jeden Zylinder in einen Mittelabschnitt und Seiten-Zweigabschnitte (27e, 27d, 27f) unterteilen.

6. Brennkraftmaschine nach Anspruch 5, **dadurch gekennzeichnet**, daß eine Mittelachse (b) der äußeren Verbindungsöffnung (27h) des Ansaugkanales (62) nach einwärts des Motors um einen bestimmten Betrag (D) in einer Richtung einer Nockenwellenachse versetzt in Bezug auf die Zylinderachse (a) angeordnet ist und die Trennabschnitte zwischen der Mittel- und den Seiten-Einlaßöffnungen (40c, 40b, 40d) sich über unterschiedliche Längen in ihrer jeweiligen stromaufwärts gerichteten Richtung erstrecken, um der in einen Verbrennungsraum des Motors eingespritzten Ladung eine Swirl-Bewegung zu verleihen.

7. Brennkraftmaschine nach Anspruch 5 oder 6, **dadurch gekennzeichnet**, daß eine Spritzachse (c) der Einspritzeinrichtung, die übereinstimmend mit der Zylinderachse (a) des zugehörigen Zylinders ausgerichtet ist, seitlich um einen bestimmten Betrag (D) in einem Sinn entgegengesetzt zu dem Seitenversatz der äußeren Verbindungsöffnung (27h) angeordnet ist, wobei die Spritzachse (c) sich im wesentlichen rechtwinklig zu einer Linie (d) erstreckt, die die Mitte der Seiten-Einlaßventile (32b) verbindet und sich parallel zu einer Nockenwellenachse erstreckt.

8. Brennkraftmaschine nach Anspruch 5, **dadurch gekennzeichnet**, daß die Kraftstoffeinspritzeinrichtung (31) in Übereinstimmung mit einer Einlaßlinie (L), die die Mittelachsen (o, n) der Zylinderbohrung und der Mittel-Einlaßventilöffnung (40c) verbinden, angeordnet ist, so daß eine Mittel-Spritzachse der Kraftstoffeinspritzeinrichtung (31) übereinstimmend mit diesen beiden Mittelachsen (o, n) ausgerichtet ist, und daß die Trennabschnitte an beiden Seiten einer Mittel-Einlaßventilöffnung (40c) unterschiedliche Längen betreffend ihre stromaufseitig gerichtete Abmessung aufweisen, um der Ladung, die zu einer Verbrennungskammer geführt wird, eine Swirl-Bewegung zu verleihen, während die Kraftstoffeinspritzeinrichtung (31) vorgesehen ist, Kraftstoff von ihrer Einspritzventildüse (31a) einzuspritzen, derart, daß eine gleichmäßige Kraftstoffzuführung zu den Seiten-Einlaßventilöffnungen (40b, 40d) an beiden Seiten der Mittel-Einlaßventilöffnung (40c) gewährleistet ist.

9. Brennkraftmaschine nach Anspruch 8, **dadurch gekennzeichnet**, daß die Form der Einspritzventildüsenanordnung der Kraftstoffeinspritzeinrichtung (31) so gestaltet ist, daß sie einen Einspritzwinkel (α1, α1', β1, β1') zwischen der Einlaßlinie (L) und einer Seiten-Einspritzlinie, die zu einem der Seiten- und zu dem Mittel-Einlaßventil (32b) gerichtet ist, die durch den Trennabschnitt getrennt sind, dessen stromaufwärtsseitige Länge größer ist als diejenige des Trennabschnittes auf der gegenüberliegenden Seite, bildet, derart, daß der zugehörige Einspritzwinkel (α2, α2', β2, β2') an der gegenüberliegenden Seite der Einlaßlinie (L) übertroffen ist.

10. Brennkraftmaschine nach zumindest einem der Ansprüche 8 oder 9, **dadurch gekennzeichnet,** daß die Kraftstoffeinspritzeinrichtung (31) seitlich versetzt in Bezug auf eine Mittellinie (b) der äußeren Verbindungsöffnung (27h) des Luftansaugkanales (62) angeordnet ist.

11. Brennkraftmaschine nach zumindest einem der vorhergehenden Ansprüche 8 bis 10, **dadurch gekennzeichnet**, daß die Kraftstoffeinspritzeinrichtung (31) eine Einspritzdüse (31a) aufweist, die eine bogenförmige Düsenöffnung aufweist.

12. Brennkraftmaschine nach zumindest einem der vorhergehenden Ansprüche 8 bis 11, **dadurch gekennzeichnet**, daß die Kraftstoffeinspritzeinrichtung (31) eine Mehrzahl von Einspritzdüsen (31a, 31b, 31c) aufweist, vorzugsweise eine Mittel- und zwei Seiten-Einspritzdüsen (31b; 31a, 31b), wobei die Einspritzachsen der Seiten-Einspritzdüsen (31a, 31b) von der Kraftstoffeinspritzeinrichtung (31) aus divergieren.

## Revendications

1. Moteur à combustion interne, en particulier moteur de motocyclette à cinq soupapes, comprenant un bloc cylindre (26), un ensemble culasse (27, 28), une pluralité de soupapes d'admission (32b) pour chaque cylindre, un système d'admission comportant un aménagement de tubulure d'admission (29), auquel est connecté un passage d'admission (62) par l'intermédiaire d'un orifice extérieur de connexion (27b), un filtre à air et un injecteur de carburant (31),
caractérisé en ce que ledit injecteur de carburant (31) est situé dans un espace (A) généralement entouré par des surfaces extérieures de l'ensemble culasse (27, 28), le filtre à air (20) et l'aménagement de tubulure d'admission (29), et en ce qu'un renflement (20c) dirigé vers le bas du filtre à air (20) s'étend vers le bas vers l'ensemble culasse (27, 28) de manière à fournir une barrière contre le bruit en provenance de l'injecteur (31).

2. Moteur à combustion interne comme revendiqué dans la revendication 1, caractérisé en ce que le filtre à air (20) comporte une partie en saillie (20c) dirigée vers le bas.

3. Moteur à combustion interne comme revendiqué dans la revendication 1 ou la revendication 2, caractérisé en ce que l'ensemble culasse comprend une culasse (27) qui se compose d'une partie de culasse inférieure (27a) et d'une partie de culasse supérieure (27b).

4. Moteur à combustion interne comme revendiqué dans au moins l'une des revendications 1 à 3, caractérisé en ce que l'injecteur de carburant (31) est positionné en décalage latéral par rapport à un axe longitudinal de l'aménagement de tubulure d'admission (29) et incliné de telle sorte qu'un axe de diffusion d'un gicleur d'injection (31a) de l'injecteur de carburant (31) est dans l'alignement de l'axe du cylindre (a) de la chambre de combustion associée et en ce que l'axe de diffusion s'étend dans une direction essentiellement perpendiculaire à un axe de l'arbre à cames.

5. Moteur à combustion interne comme revendiqué dans au moins l'une des revendications 1 à 3, caractérisé en ce que le moteur est un moteur à cylindres multiples dont chaque cylindre comporte au moins une soupape d'admission centrale et deux soupapes d'admission latérales (32b), les orifices respectifs de soupape (40b, 40c, 40d) de celles-ci définis par des sièges de soupape sont séparés par des séparations d'une culasse (27), lesdites séparations s'étendant dans une direction amont à partir des parties de paroi de culasse entre les sièges de soupape adjacents et divisant le passage d'admission (62) pour chaque cylindre en parties centrale et latérales en dérivation (27e, 27d, 27f).

6. Moteur à combustion interne comme revendiqué dans la revendication 5, caractérisé en ce que un axe central (b) de l'orifice extérieur de connexion (27h) du passage d'admission (62) est positionné en décalage latéral vers l'intérieur du moteur dans la direction de l'axe de l'arbre à cames par rapport à l'axe du cylindre (a) suivant une certaine valeur (D) et les séparations entre les orifices d'admission central et latéraux (40c, 40d, 40b) s'étendent sur différentes longueurs dans leur direction en amont afin de procurer un mouvement tourbillonnant à la charge injectée à l'intérieur d'une chambre de combustion du moteur.

7. Moteur à combustion interne comme revendiqué dans la revendication 5 ou la revendication 6, caractérisé en ce qu'un axe de diffusion (c) de l'injecteur de carburant qui est dans l'alignement de l'axe du cylindre (a) du cylindre associé, est situé en décalage latéral suivant la même valeur (D) dans le sens opposé au décalage de l'orifice extérieur de connexion (27h), ledit axe de diffusion (c) s'étendant essentiellement de manière perpendiculaire à une ligne (d) qui relie le centre des soupapes d'admission latérales (32b) et qui s'étend de manière parallèle à un axe de l'arbre à cames.

8. Moteur à combustion interne comme revendiqué dans la revendication 5, caractérisé en ce que l'injecteur de carburant (31) est positionné en relation avec une ligne d'admission (L) qui relie les axes centraux (o, n) de l'alésage du cylindre et de l'orifice de soupape d'admission centrale (40c) de manière à ce qu'un axe central de diffusion de l'injecteur de carburant (31) soit dans l'alignement des dits deux axes centraux (o, n), et en ce que les séparations sur les deux côtés d'un orifice de soupape d'admission centrale (40c) comportent des longueurs différentes dans leur dimension en amont afin de procurer un mouvement tourbillonnant à la charge qui alimente une chambre de combustion alors que l'injecteur de carburant (31) est adapté pour diffuser du carburant à partir de son gicleur d'injection (31a) de manière à assurer une alimentation uniforme en carburant aux orifices des soupapes d'admission latérales (40b, 40d) situés de chaque côté de l'orifice de soupape d'admission centrale (40c).

9. Moteur à combustion interne comme revendiqué dans la revendication 8, caractérisé en ce que la forme de l'aménagement de gicleur d'injection de l'injecteur de carburant (31) est conçue de manière à fournir un angle d'injection (α1, α1', β1, β1') entre la ligne d'admission (L) et une ligne latérale de diffusion dirigée vers l'une des soupapes centrale et latérales (32b) qui sont séparées par cette séparation dont la longueur en amont est supérieure à celle de la longueur opposée afin de dépasser l'angle d'injection correspondant (α2, α2', β2, β2') sur le côté opposé de la ligne d'admission (L).

10. Moteur à combustion interne comme revendiqué dans au moins l'une des revendications 8 ou 9, caractérisé en ce que l'injecteur de carburant (31) est positionné en décalage latéral par rapport à une ligne centrale (b) de l'orifice extérieur de connexion (27h) du passage d'admission d'air (62).

11. Moteur à combustion interne comme revendiqué dans au moins l'une des revendications 8 à 10 qui précèdent, caractérisé en ce que l'injecteur de carburant (31) comprend une buse d'injection (31a) qui comporte une ouverture de buse en forme d'arc de cercle.

12. Moteur à combustion interne comme revendiqué dans au moins l'une des revendications 8 à 11 qui précèdent, caractérisé en ce que l'injecteur de carburant (31) comprend une pluralité de buses d'injection (31a, 31b, 31c), de préférence une buse d'injection centrale et deux buses d'injection latérales (31b; 31a, 31c) dans lesquelles les axes d'injection des buses d'injection latérales (31a, 31c) s'écartent de l'injecteur de carburant (31).
